# EUROPÄISCHE PATENTSCHRIFT

(11) **EP 1 763 982 B1**
(45) Veröffentlichungstag und Bekanntmachung des Hinweises auf die Patenterteilung: **26.03.2008**
(21) Anmeldenummer: 06018910.7
(22) Anmeldetag: 09.09.2006
(51) Int. Cl.: A01B 59/06, A01B 49/00

(54) **Landwirtschaftliches Bodenbearbeitungsgerät**
Agricultural soil working implement
Outil agricole de travail du sol

(30) Priorität: 15.09.2005 DE 102005044075
(43) Veröffentlichungstag der Anmeldung: 21.03.2007
(73) Patentinhaber: Amazonen-Werke H. Dreyer GmbH & Co. KG, 49205 Hasbergen (DE)
(72) Erfinder: Gieseke, Reinhard, 27798 Hude (DE); Reinke, Wilfried, 26123 Oldenburg (DE); Tiessen, Reimer Uwe, 26135 Oldenburg (DE)

(56) Entgegenhaltungen:
- DE-A1- 2 700 778
- FR-A1- 2 312 184
- FR-A1- 2 608 001
- US-A- 4 116 283

## Beschreibung

Die Erfindung betrifft ein landwirtschaftliches Bodenbearbeitungsgerät gemäß des Oberbegriffes des Patentanspruches 1.

Derartige Bodenbearbeitungsgeräte sind z.B. aus der FR-A- 2 312 184 bekannt. Bei diesen bekannten Bodenbearbeitungsgeräten ist der Anbauturm mit den oberen Kupplungselementen mittels Schraubverbindungen mit dem Rahmen verbunden. Die beiden unteren Kupplungspunkte der Dreipunktkupplungselemente sind an dem Rahmen angeordnet. Die Unterlenker eines Anbaugestänges für ein dem Bodenbearbeitungsgerät nachfolgendes Bestellgerät sind an zusätzlichen Kuppelelementen, die an dem Rahmen befestigt sind anzuordnen.

Der Erfindung liegt die Aufgabe zugrunde, eine einfache Anordnung des Anbauturmes und der Unterlenker des Anbaugestänges zu schaffen.

Diese Aufgabe wird erfindungsgemäß durch die kennzeichnenden Merkmale des Patentanspruches 1 gelöst. Infolge dieser Maßnahmen wird eine wesentliche Vereinfachung der Anordnung des Anbauturmes auf dem Rahmen des Gerätes sowie die mögliche Anordnung des Anbaugestänges an dem Gerät zur Ankupplung nachfolgender Maschinen an das Gerät ermöglicht. Andererseits kann, wenn das Anbaugestänge nicht an dem Gerät angeordnet ist, durch die Anordnung der Distanzhülse eine lagesichere Befestigung des Anbauturmes auf dem Gerät sichergestellt werden. Durch die erfindungsgemäße Anordnung des Anbauturmes auf dem Gerät entfällt die aufwendige Verschraubung des Anbauturmes mit dem Rahmen des Gerätes und zusätzlicher Verbindungs- und Kuppelelemente zur Anordnung der Unterlenker des Anbaugestänges.

Eine besonders seitenstabile Führung der Unterlenker des Anbaugestänges wird dadurch erreicht, dass der Anbauturm an seinen beiden Unterseiten jeweils eine in Fahrtrichtung und senkrecht verlaufende Außenfläche aufweist, dass an diesen Außenflächen der jeweilige Unterlenker des Anbaugestänges zur Anlage kommt.

Eine lagesichere Anordnung des Anbaugestänges und des Anbauturmes an dem Gerät wird dadurch erreicht, dass die Verbindungselemente auf der Vorder- und Rückseite des Rahmens jeweils zwei beabstandet zueinander angeordnete Laschen aufweisen, dass der Abstand der Laschen der gemeinsamen Dicke des Unterlenkers des Anbaugestänges und des unteren vorderen Verbindungselementes des Anbauturmes entspricht.

Eine vorteilhafte Ausgestaltung der vorderen unteren Kupplungselemente für die Aufnahme des Anbauturmes, der Unterlenker des Anbaugestänges sowie der unteren Dreipunktkupplungselemente wird dadurch erreicht, dass die vorderen beabstandet zueinander Verbindungslaschen gleichzeitig als Aufnahmeelement für den Bolzen des Dreipunktkupplungselementes des Bodenbearbeitungsgerätes ausgebildet sind.

Eine gute seitliche Führung der Unterlenker des Anbaugestänges wird dadurch erreicht, dass auf der Rückseite des Rahmens ebenfalls zwei beabstandet zueinander angeordnete Laschen des Verbindungselementes angeordnet sind, die in dem Abstand der Dicke des hinteren Verbindungselementes des Anbauturmes und der Dicke des Unterlenkers des Anbaugestänges zueinander angeordnet sind.

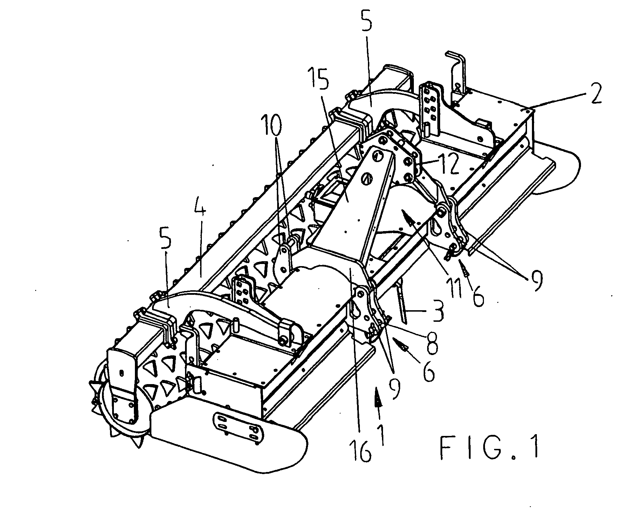

Weitere Einzelheiten der Erfindung sind den übrigen Unteransprüchen, der Beispielsbeschreibung und den Zeichnungen zu entnehmen. Hierbei zeigen
- Fig. 1: das Bodenbearbeitungsgerät in perspektivischer Darstellung,

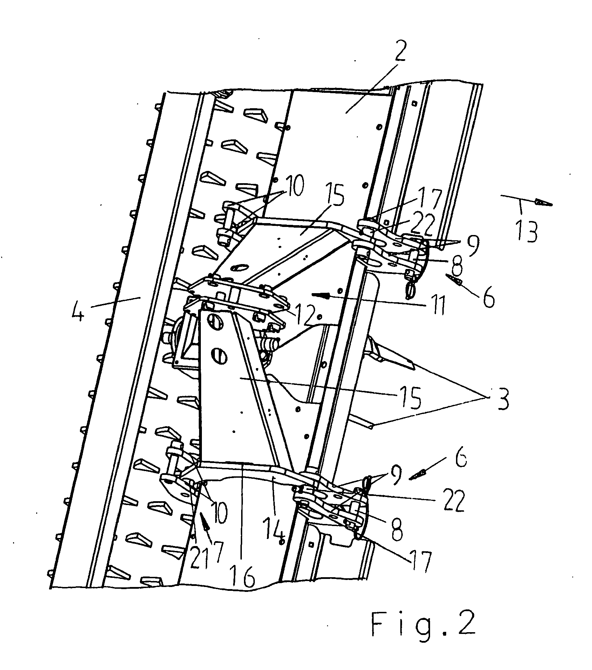

- Fig. 2: das Bodenbearbeitungsgerät ausschnittsweise in perspektivischer Darstellung und in vergrößertem Maßstab,

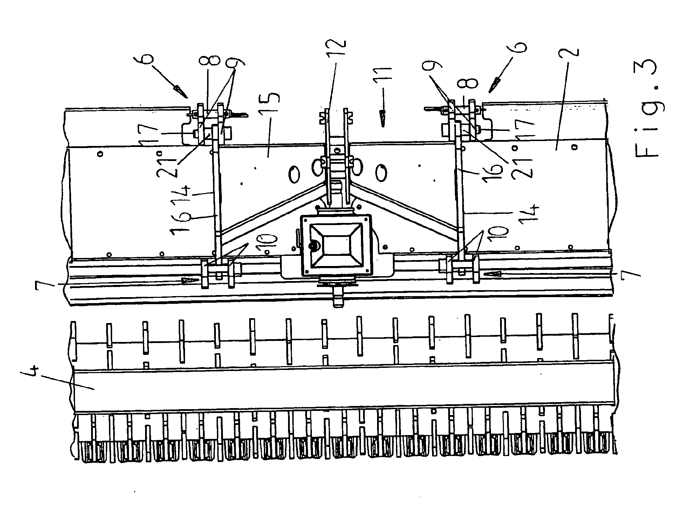

- Fig. 3: das Bodenbearbeitungsgerät ausschnittsweise in der Draufsicht,

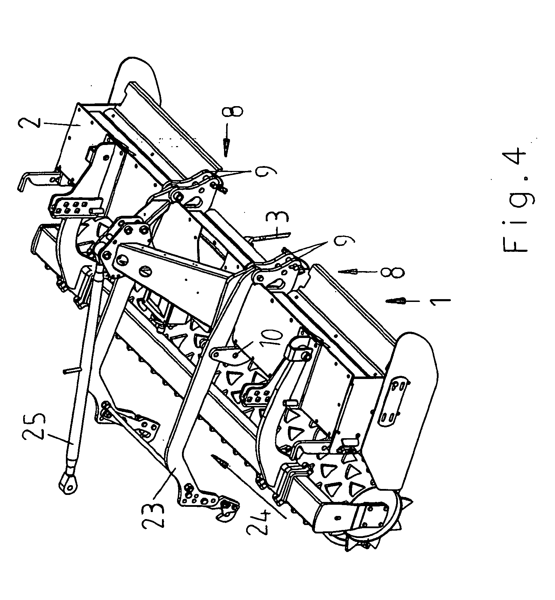

- Fig. 4: das Bodenbearbeitungsgerät mit Anbaugestänge für eine nachfolgende Bestellmaschine in perspektivischer Darstellung,

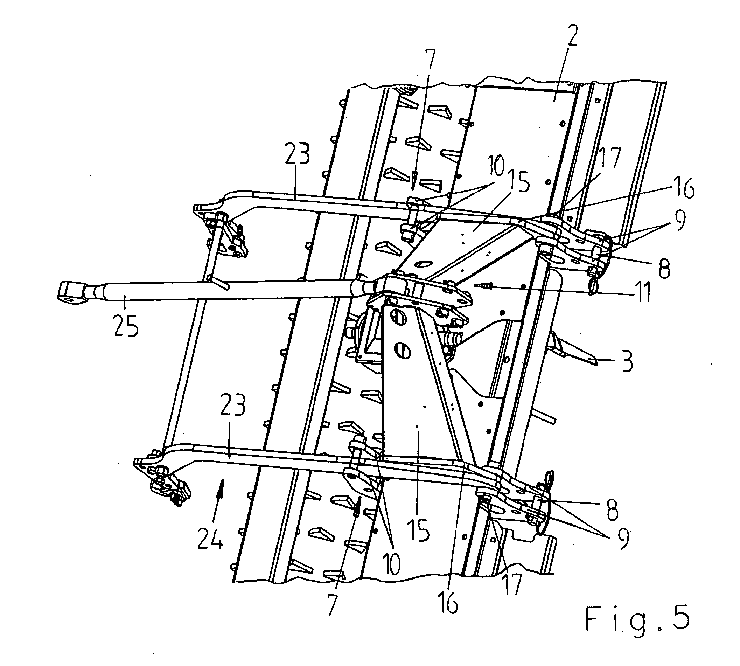

- Fig. 5: das Bodenbearbeitungsgerät gemäß Fig. 4 in ausschnittsweiser und perspektivischer Darstellung,

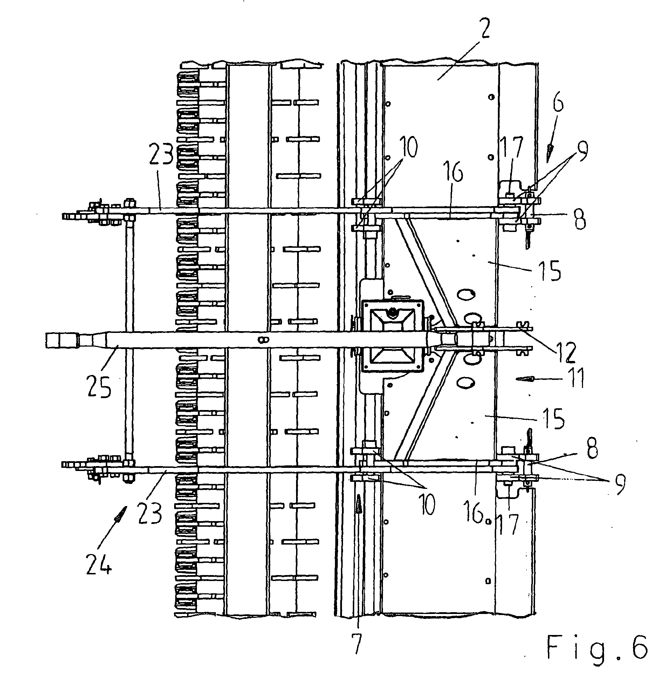

- Fig. 6: das Bodenbearbeitungsgerät gemäß Fig. 4 in ausschnittsweiser Darstellung und in der Draufsicht,

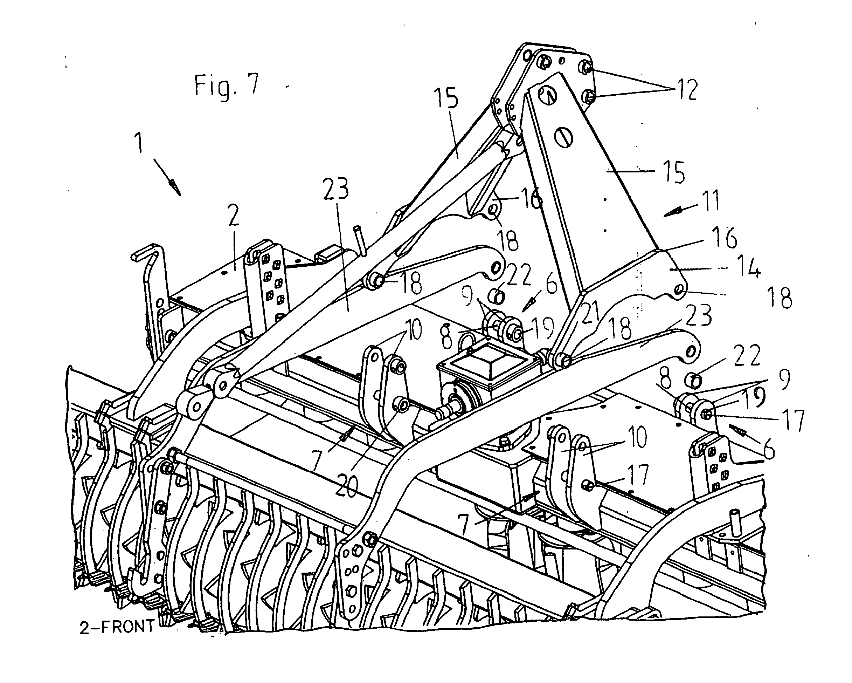

- Fig. 7: das Bodenbearbeitungsgerät in ausschnittsweiser, perspektivischer und in teilweiser Explosionsdarstellung,

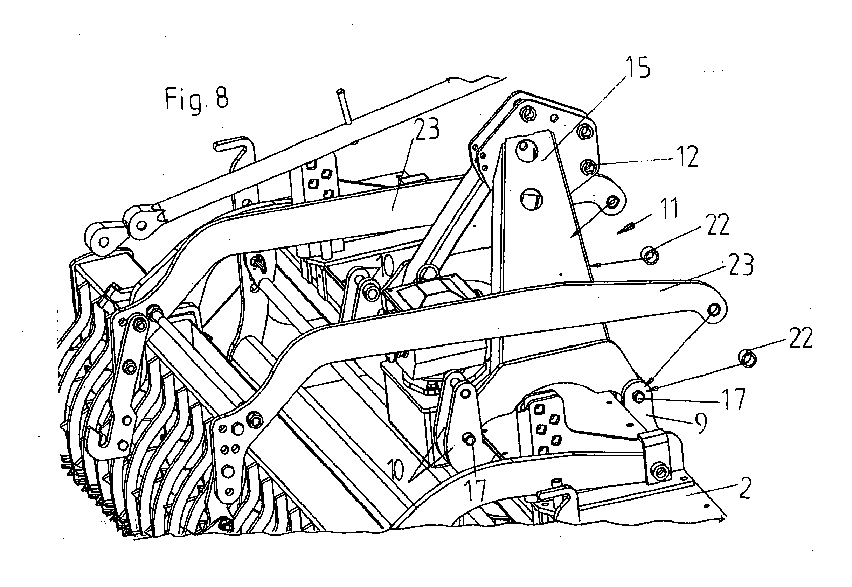

- Fig. 8: das Bodenbearbeitungsgerät in perspektivischer Darstellung mit montiertem Anbauturm,

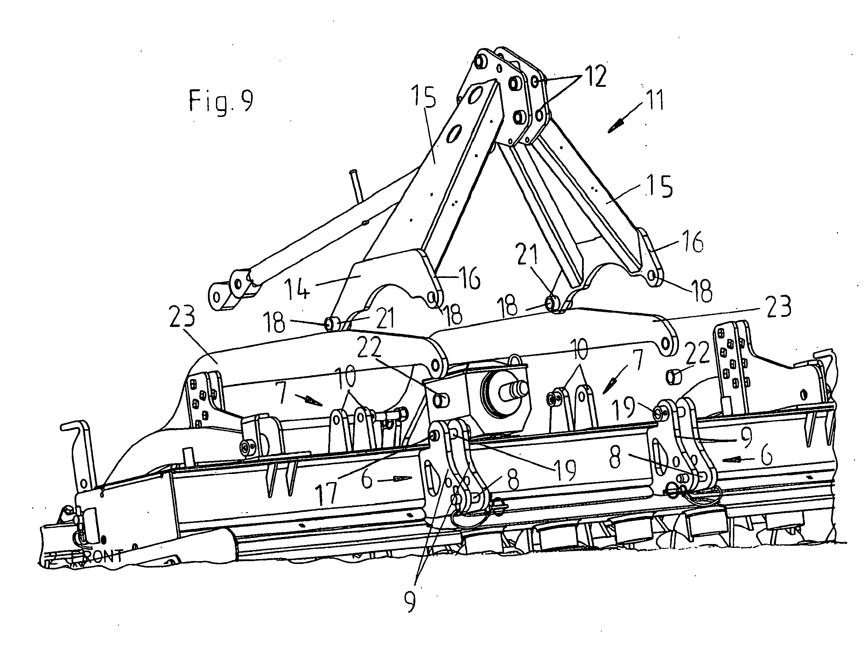

- Fig. 9: das Bodenbearbeitungsgerät in ausschnittsweiser, in und perspektivischer Darstellung und in teilweiser Explosionsdarstellung,

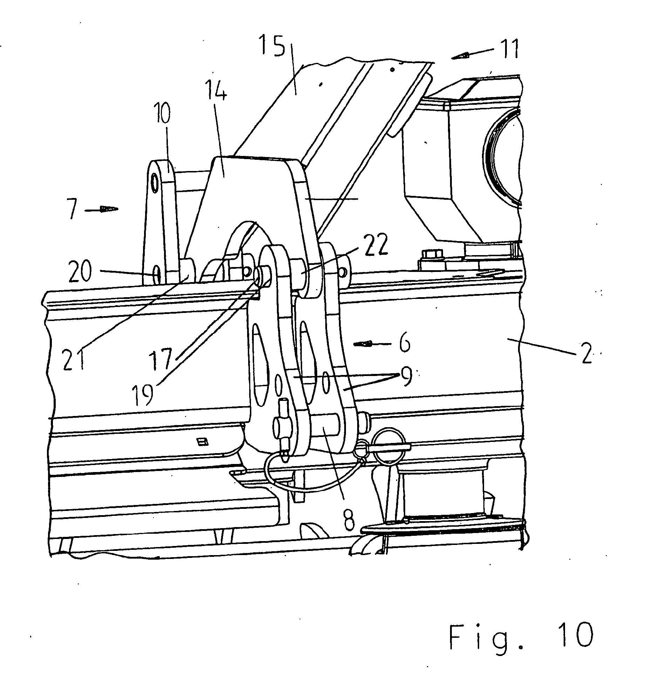

- Fig. 10: den linken vorderen Unterlenkeranlenkpunkt mit Distanzhülse in perspektivischer Darstellung und

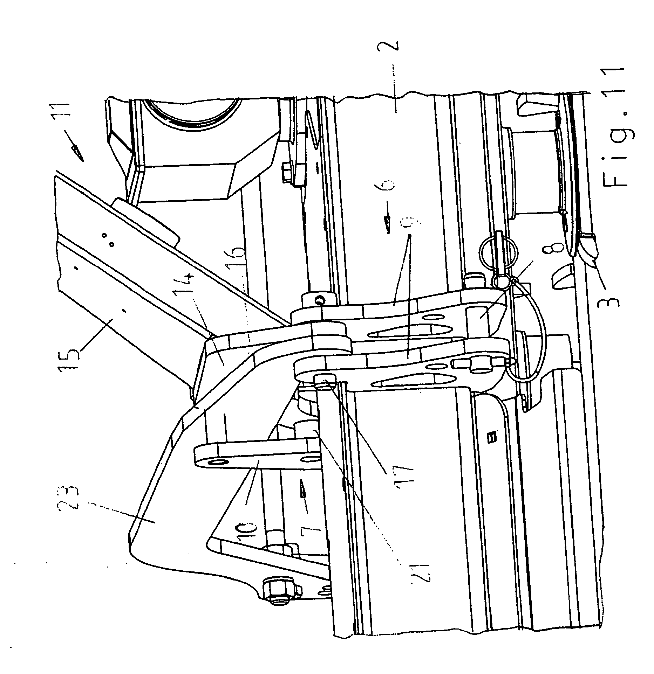

- Fig. 11: den linken vorderen Unterlenkeranlenkpunkt mit Unterlenker des Anbaugestänges in perspektivischer Darstellung.

Das Bodenbearbeitungsgerät 1 weist den Rahmen 2 mit den daran angeordneten Bodenbearbeitungswerkzeugen 3 auf. Hinter dem Bodenbearbeitungsgerät 1 ist eine Nachlaufwalze 4 mittels Verbindungsarmen 5 angeordnet. Über die Nachlaufwalze 4 wird die Arbeitstiefe der Bodenbearbeitungswerkzeuge 3 des Bodenbearbeitungsgerätes 1 eingestellt. Auf der Vorderseite des Rahmens 2 und auf der Rückseite des Rahmens 2 sind jeweils zwei beabstandet zueinander angeordnete Verbindungselemente 6 und 7 angeordnet. Der Abstand der Verbindungselemente 6,7 entspricht dem üblichen Abstand unterer Dreipunktkupplungselemente 8 zum Anbau an den Dreipunktkraftheber eines Schleppers. Die Verbindungselemente 6,7 auf der Vorder- und Rückseite des Rahmens 2 weisen jeweils zwei beabstandet zueinander angeordnete Laschen 9 bzw. 10 auf. Des weiteren ist an dem Rahmen 2 ein Anbauturm 11, an dem der oberen Dreipunktkupplungspunkt 12 der Dreipunktkupplungselemente angeordnet ist. Der Anbauturm 11 weist an seinen beiden Unterseiten jeweils eine in Fahrtrichtung 13 und senkrecht verlaufende Außenfläche 14 auf. Diese Außenflächen 14 befinden sich an den schräg nach unten ragenden Streben 15 des Anbauturms 11 angeordneten plattenartigen Elementen 16. Das obere Dreipunktkupplungselement 12 ist also an dem Anbauturm 11 und die unteren Dreipunktkupplungselemente 8 sind an dem Rahmen 2 des Bodenbearbeitungsgerätes 1 angeordnet. Die vorderen und die hinteren Verbindungslaschen 9, 10 weisen mehrere übereinander angeordnete Durchbrüche auf, durch die Bolzen 17 steckbar sind. Das plattenartige Element 16 des Anbauturmes 11 weist auf der Vorder- und Rückseite jeweils Durchbrüche 18 auf, die dem Abstand zu dem oberen Durchbruch 19 in den vorderen Verbindungselement 9 und dem unteren Durchbruch 20 in dem hinteren Verbindungselement 10 entsprechen. Der Anbauturm 11 ist über die durch die Durchbrüche 18, 19 und 20 der Verbindungslaschen 9,10 und dem plattenartigen Element 16 gestreckten Bolzen 17 mit dem Rahmen 2 des Gerätes 1 verbunden und somit am Rahmen 2 angeordnet. In dem hinteren Durchbruch 18 des plattenartigen Elementes 16 des Anbauturmes 11 ist eine Distanzhülse 21 jeweils eingeschweißt. Diese Distanzhülse 21 weist eine Breite auf, die dem inneren Abstand der beiden Laschen 10, der hinteren Verbindungselemente 7 entspricht. Auf dem Bolzen 17 des vorderen Verbindungselementes 6 ist eine Distanzhülse 22 angeordnet, so dass der Anbauturm 11 seitlich sicher geführt auf dem Rahmen 2 angeordnet ist.

Anstelle der Distanzhülse 22, die auf den vorderen Kupplungsbolzen 17 angeordnet ist, kann auf diesem Kupplungsbolzen 17 bei den vorderen Verbindungselementen 6 der Unterlenker 23 eines Verbindungsgestänges 24 zum Ankuppeln einer Bestellmaschine auf der Rückseite des Bodenbearbeitungsgerätes 1 angeordnet werden. Der Abstand der Laschen 9 entspricht der gemeinsamen Dicke des Unterlenkers 23 des Anbaugestänges 24 und des unteren vorderen Verbindungselementes 16, nämlich dem plattenartigen Element 16 des Anbauturmes 11. An den Außenflächen 14 des plattenartigen Elementes 16 des Anbauturmes 11 kommt der jeweilige Unterlenker 23 des Anbaugestänges 24 zur Anlage.

Hierdurch wird eine seitliche Führung des Anbaugestänges 24 gegenüber dem Rahmen 2 des Bodenbearbeitungsgerätes 1 erreicht. Somit sind also auf den vorderen Bolzen 17 der Kupplungselemente 6 wahlweise die Unterlenker 23 eines Anbaugestänges 24 für ein mit dem Bodenbearbeitungsgerätes 1 nachfolgendes Bestellgerät oder jeweils eine Distanzhülse 22 anzuordnen. Die auf der Rückseite des Rahmens 2 beabstandet zueinander angeordneten Laschen 10 des Verbindungselementes 7 sind in einem derartigen Abstand zueinander angeordnet, die der Dicke des hinteren Verbindungselementes 16 des Anbauturmes 11 und der Dicke des Unterlenkers 23 des Anbaugestänges 24 zueinander entspricht. Hierdurch wird eine seitliche Führung des Anbaugestänges 24 erreicht.

Des weiteren weist das Anbaugestänge 24 Oberlenker 25 auf, der an der Rückseite des oberen Anlenkpunktes des Anbauturmes 11 mittels eines Bolzens angeschlossen wird.

## Patentansprüche

1. Landwirtschaftliches Bodenbearbeitungsgerät (1) mit einem Rahmen (2), Dreipunktkupplungselementen (8,12) zum Anbau an den Dreipunktkraftheber eines Ackerschleppers, wobei das obere Kupplungselement (12) der Dreipunktkupplungselemente (8, 12) an einem mit dem Rahmen (2) mittels Verbindungselementen (6,7) verbundenen Anbauturm (11) und die beiden unteren Kupplungspunkte der Dreipunktkupplungselemente (8) an dem Rahmen (12) angeordnet sind, **dadurch gekennzeichnet, dass** sich jeweils auf der Vorder- und Rückseite des Rahmens (2) in Flucht zu den unteren Kupplungselementen der Dreipunktkupplungselemente (8) die Verbindungselemente (6,7) befinden, dass die Verbindungselemente (6,7) als Laschen (9,10) und Bolzen (17) zusammenwirkende Kupplungselemente ausgebildet sind, dass auf dem vorderen Bolzen (17) der Kupplungselemente wahlweise die Unterlenker (23) eines Anbaugestänges (24) für einen mit den Bodenbearbeitungsgeräten nachfolgenden Bestellgerät oder jeweils eine Distanzhülse (22) anordbar ist.

2. Bodenbearbeitungsgerät nach Anspruch 1, **dadurch gekennzeichnet, dass** der Anbauturm (11) an seinen beiden Unterseiten jeweils eine in Fahrtrichtung (13) und senkrecht verlaufende Außenfläche (14) aufweist, dass an diesen Außenflächen (14) der jeweilige Unterlenker (23) des Anbaugestänges (24) zur Anlage kommt.

3. Bodenbearbeitungsgerät nach Anspruch 1, **dadurch gekennzeichnet, dass** die Verbindungselemente (6,7) auf der Vorder- und Rückseite des Rahmens (2) jeweils zwei beabstandet zueinander angeordnete Laschen (9,10) aufweisen, dass der Abstand der Laschen (9,10) der gemeinsamen Dicke des Unterlenkers (23) des Anbaugestänges (24) und des unteren vorderen Verbindungselementes (16) des Anbauturmes (11) entspricht.

4. Bodenbearbeitungsgerät nach Anspruch 1, **dadurch gekennzeichnet, dass** die vorderen beabstandet zueinander Verbindungslaschen (9) gleichzeitig als Aufnahmeelement für den Bolzen (8) des Dreipunktkupplungselementes (8) des Bodenbearbeitungsgerätes (1) ausgebildet sind.

5. Bodenbearbeitungsgerät nach Anspruch 1, **dadurch gekennzeichnet, dass** auf der Rückseite des Rahmens (2) ebenfalls zwei beabstandet zueinander angeordnete Laschen (10) des Verbindungselementes (7) angeordnet sind, die in dem Abstand der Dicke des hinteren Verbindungselementes (16) des Anbauturmes (11) und der Dicke des Unterlenkers (23) des Anbaugestänges (24) zueinander angeordnet sind.

## Claims

1. Agricultural ground cultivating device (1) including a frame (2), three-point coupling elements (8, 12) for attachment to the three-point hydraulic lift of a tractor, wherein the upper coupling element (12) of the three-point coupling elements (8, 12) is disposed on an attachment tower (11) that is connected to the frame (2) by means of connecting elements (6, 7) and the two lower coupling points of the three-point coupling elements (8) are disposed on the frame (2), **characterised in that** the connecting elements (6, 7) are situated in each case on the front and rear side of the frame (2) in alignment with the lower coupling elements of the three-point coupling elements (8), **in that** the connecting elements (6, 7) are in the form of coupling elements that interact as plates (9, 10) and bolts (17), **in that** either the under-connecting rod (23) of an attachment linkage assembly (24) can be disposed on the front bolt (17) of the coupling elements for a combination machine following with the ground cultivating devices or respectively a spacer sleeve.

2. Ground cultivating device according to claim 1, **characterised in that** the attachment tower (11) includes at its two bottom ends in each case an outside face (14) that extends in the direction of travel (13) and vertically, **in that** the respective under-connecting rod (23) of the attachment linkage assembly (24) abuts against the said outside faces (14).

3. Ground cultivating device according to claim 1, **characterised in that** the connecting elements (6, 7) on the front and rear side of the frame (2) each include two plates (9, 10) that are spaced apart, **in that** the distance between the plates (9, 10) corresponds to the common thickness of the under-connecting rod (23) of the attachment linkage assembly (24) and of the lower front connecting element (16) of the attachment tower (11).

4. Ground cultivating device according to claim 1, **characterised in that** the front connecting plates (9) that are spaced apart are at the same time configured as an accommodating element for the bolt (8) of the three-point coupling element (8) of the ground cultivating device (1).

5. Ground cultivating device according to claim 1, **characterised in that** two plates (10) of the connecting element (7) are also disposed spaced apart on the rear side of the frame (2), the spacing between the said plates being the thickness of the rear connecting element (16) of the attachment tower (11) and the thickness of the under-connecting rod (23) of the attachment linkage assembly (24).

## Revendications

1. Outil agricole de travail du sol (1) comportant un châssis (2), des éléments d'attelage à trois points (8, 12) destinés à l'attelage sur le dispositif de levage à trois points d'un tracteur agricole, l'élément de couplage supérieur (12) des éléments d'attelage à trois points (8, 12) étant agencé sur une tour d'attelage (11) raccordée au châssis (2) au moyen d'éléments de raccord (6, 7) et les deux points de couplage inférieurs des éléments d'attelage à trois points (8) étant disposés sur le châssis (2),
**caractérisé en ce que**
les éléments de raccord (6, 7) se trouvent respectivement sur le côté avant et le côté arrière du châssis (2) à fleur des éléments de couplage inférieurs des éléments d'attelage à trois points (8), les éléments de raccord (6, 7) sont conçus sous la forme d'éléments de couplage coopérant en tant que pattes de fixation (9, 10) et boulons (17), les bras inférieurs (23) d'une tringlerie d'attelage (24) destinée à un appareil de culture postérieur comportant les outils de travail du sol ou bien des entretoises (22) respectives peuvent être installés, au choix, sur le boulon avant (17) des éléments de couplage.

2. de travail du sol selon la revendication 1,
**caractérisé en ce que**
la tour d'attelage (11) présente respectivement sur ses deux côtés inférieurs une surface extérieure (14) verticale et suivant le sens de la marche (13), les bras inférieurs (23) de la tringlerie d'attelage (24) venant respectivement en butée contre ces surfaces extérieures (14).

3. Outil de travail du sol selon la revendication 1,
**caractérisé en ce que**
les éléments de raccord (6, 7) présentent respectivement, sur le côté avant et le côté arrière du châssis (2), deux pattes de fixation (9, 10) espacées l'une de l'autre, l'écart entre les pattes de fixation (9, 10) correspondant à l'épaisseur conjointe du bras inférieur (23) de la tringlerie d'attelage (24) et de l'élément de raccord (16) avant inférieur de la tour d'attelage (11).

4. Outil de travail du sol selon la revendication 1,
**caractérisé en ce que**
les pattes de fixation (9) avant espacées l'une de l'autre ont simultanément fonction d'élément de réception pour le boulon (8) de l'élément d'attelage à trois points (8) de l'outil de travail du sol (1).

5. Outil de travail du sol selon la revendication 1,
**caractérisé en ce que**
deux pattes de fixation (10), espacées l'une de l'autre, appartenant à l'élément de raccord (7) sont également disposées sur le côté arrière du châssis (2), avec un écart entre elles correspondant à l'épaisseur de l'élément de raccord arrière (16) de la tour d'attelage (11) et l'épaisseur du bras inférieur (23) de la tringlerie d'attelage (24).
